# FASCICULE DE BREVET EUROPEEN

(11) **EP 4 361 486 B1**
(45) Date de publication et mention de la délivrance du brevet: **15.01.2025**
(21) Numéro de dépôt: 23205110.2
(22) Date de dépôt: 23.10.2023
(51) Int. Cl.: F16L 37/088

(54) **CONNECTEUR FLUIDIQUE ET SON PROCÉDÉ D'ASSEMBLAGE**
FLUIDVERBINDER UND VERFAHREN ZUR MONTAGE DAVON
FLUID CONNECTOR AND METHOD OF ASSEMBLING SAME

(30) Priorité: 28.10.2022 FR 2211282
(43) Date de publication de la demande: 01.05.2024
(73) Titulaire: HUTCHINSON, 75008 Paris (FR)
(72) Inventeur: HALIN, Mickaël, 13600 La Ciotat (FR); MONGENDRE, Julien, 45530 Sury aux Bois (FR); BORDINAT, Fabien, 45200 Montargis (FR)
(74) Mandataire: Gevers & Orès

(56) Documents cités:
- AT-B1- 512 397
- US-B2- 11 168 819
- US-B2- 7 438 328

## Description

### Domaine technique de l'invention

La présente invention concerne un connecteur fluidique et son procédé d'assemblage.

### Arrière-plan technique

L'arrière-plan technique comprend notamment les documents US-B2-11,168,819, AT-B1-512 397 et US-B2-7,438,328.

Un connecteur fluidique est un dispositif qui permet de connecter deux raccords tubulaires d'un circuit fluidique dans le but de permettre la circulation de fluide à travers les raccords et dans le circuit. Les deux raccords sont en général des raccords mâle et femelle et le raccordement de ces deux raccords est donc réalisé par emmanchement mâle-femelle.

Pour éviter une désolidarisation accidentelle des deux raccords du connecteur, il est connu d'équiper le connecteur d'un verrou. Le verrou est porté par l'un des raccords, par exemple le raccord femelle. Lorsque les raccords mâle et femelle sont engagés l'un dans l'autre, le verrou peut coopérer avec le raccord mâle pour la retenir axialement dans le raccord femelle. La direction axiale est ici la direction d'engagement des raccords l'un dans l'autre.

Dans le cadre de la présente invention, le verrou est une épingle métallique qui a une forme générale en U et est montée à cheval sur le raccord femelle. L'épingle comporte deux branches latérales qui traversent des lumières du raccord femelle et peuvent s'engager dans une gorge du raccord mâle.

L'épingle est déformable élastiquement par écartement et rapprochement de ses branches. Lorsque les branches sont rapprochées l'une de l'autre, elles sont engagées dans la gorge du raccord mâle et le bloque axialement vis-à-vis du raccord femelle. Lorsque les branches sont écartées l'une de l'autre, elles sont extraites de la gorge du raccord mâle qui peut être retiré du raccord femelle par translation axiale.

Le passage de la position écartée à la position rapprochée des branches de l'épingle est de préférence réalisé de manière automatique par retour élastique de ces branches. En pratique, lors de l'insertion du raccord mâle dans le raccord femelle, le raccord mâle prend appui sur les branches de l'épingle et les sollicitent radialement vers l'extérieur pour les écarter l'une de l'autre. La direction radiale est ici exprimée par rapport à l'axe précité. Cette insertion est poursuivie jusqu'à ce que la gorge du raccord femelle et l'épingle soient situés dans un même plan perpendiculaire à l'axe. Les branches se rapprochent alors l'une de l'autre par retour élastique et se logent dans la gorge du raccord femelle.

Dans la technique actuelle, c'est une partie tronconique du raccord mâle qui coopère avec les branches de l'épingle lors de son insertion dans le raccord femelle. Lors de l'insertion, les branches s'écartent l'une de l'autre du fait de leur glissement sur cette partie tronconique, depuis l'extrémité axiale de plus petit diamètre de cette partie tronconique jusqu'à son extrémité axiale de plus grand diamètre.

La capacité de rétention axiale du raccord mâle dans le raccord femelle dépend notamment de la force nécessaire pour écarter les branches l'une de l'autre. Il est donc préférable, pour éviter un écartement involontaire des branches, que cette force soit relativement importante. Pour générer cette force, il est nécessaire d'engager en force le raccord mâle dans le raccord femelle de façon à ce que, comme évoqué dans ce qui précède, le raccord mâle coopère avec les branches et exerce la force nécessaire à leur écartement.

Dans la technique actuelle, l'engagement en force du raccord mâle dans le raccord femelle est réalisé manuellement et peut être difficile à réaliser par un opérateur qui réalise le montage.

La présente invention propose un perfectionnement à la technique actuelle, qui apporte une solution simple, efficace et économique à ce problème.

### Résumé de l'invention

L'invention concerne un connecteur fluidique, comportant :
- un raccord tubulaire femelle ayant un premier axe,
- un raccord tubulaire mâle ayant un second axe et configuré pour être engagé coaxialement dans le raccord femelle, et
- une épingle métallique ayant une forme générale en U montée à cheval sur le raccord femelle, cette épingle comportant deux branches latérales dont des portions sont configurées pour traverser au moins une lumière du raccord femelle et pour être engagées dans une gorge du raccord mâle pour le bloquer axialement vis-à-vis du raccord femelle, l'épingle étant déformable élastiquement par écartement et rapprochement de ses branches et pouvant adopter plusieurs configurations notamment entre une configuration rapprochée dans laquelle lesdites portions sont à une distance D1 l'une de l'autre et sont logées dans la gorge, et une configuration écartée dans laquelle lesdites portions sont à une distance D2 l'une de l'autre et autorisent le retrait du raccord mâle vis-à-vis du raccord femelle, D2 étant supérieure à D1,

caractérisé en ce que l'épingle est mobile axialement sur le raccord femelle depuis une position non fonctionnelle dans laquelle ses branches sont maintenues écartées par le raccord femelle de façon à ce que lesdites portions soient à une distance D3 l'une de l'autre, D3 étant comprise entre D1 et D2, jusqu'à une position fonctionnelle dans laquelle lesdites portions sont situées au niveau de ladite au moins une lumière et sont aptes à la traverser par retour élastique,
et en ce que le raccord mâle comprend une partie configurée pour être engagée dans le raccord femelle et comportant un diamètre externe qui est supérieur à D3, de sorte que, lors de l'engagement du raccord mâle dans le raccord femelle, cette partie coopère directement avec lesdites portions pour déplacer l'épingle de sa position non fonctionnelle à sa position fonctionnelle. Dans la présente demande, on entend par « position » une position de l'épingle et on définit notamment deux positions pour l'épingle à savoir une position non fonctionnelle et une position fonctionnelle. On entend par « configuration » un état des branches de l'épingle, plus ou moins écartées ou rapprochées l'une de l'autre. Les branches peuvent être dans une position (extrême - correspondant à la distance D2) écartée nécessaire au désengagement du raccord mâle vis-à-vis du raccord femelle. Les branches peuvent être dans une position (extrême - correspondant à la distance D1) rapprochée permettant le blocage axial du raccord mâle dans le raccord femelle. Les branches peuvent en outre être dans une position (intermédiaire - correspondant à la distance D3) écartée pour coopérer avec le raccord mâle lors de son insertion dans le raccord femelle.

Dans la technique antérieure, les branches de l'épingle peuvent adopter pour l'essentiel deux configurations « stables » extrêmes à savoir une configuration écartée et une configuration rapprochée. Dans la présente invention, l'épingle peut adopter une configuration « stable » intermédiaire dans laquelle ses branches sont écartées l'une de l'autre mais moins que dans la configuration extrême écartée.

Le connecteur selon l'invention est destiné à être livré avec son épingle dont les branches sont dans cette configuration intermédiaire. Ainsi, lorsqu'un opérateur engage le raccord mâle dans le raccord femelle, la force nécessaire à l'écartement des branches est plus faible que dans la technique antérieure puisque les branches sont déjà un peu écartées l'une de l'autre. En effet, la force nécessaire correspond à l'écartement des branches depuis cette configuration intermédiaire jusqu'à la configuration extrême écartée (et non pas de la configuration extrême rapprochée jusqu'à la configuration extrême écartée). Le montage des raccords est donc plus simple à réaliser par l'opérateur.

On comprend donc que l'épingle est montée sur le raccord femelle de manière précontrainte de façon à ce que ses branches soient déjà écartées l'une de l'autre dans la position non fonctionnelle. On comprend également que l'épingle est déplacée axialement sur le raccord femelle pour passer de sa position non fonctionnelle à sa position fonctionnelle dans laquelle ses branches peuvent se loger dans la gorge du raccord mâle par retour élastique.

Dans la présente invention, c'est le raccord mâle qui coopère avec l'épingle et la déplace sur le raccord femelle. La force d'engagement du raccord mâle dans le raccord femelle permet donc dans un premier temps de déplacer l'épingle sur le raccord femelle puis dans un second temps d'écarter davantage les branches de l'épingle. Cette force reste inférieure à la force nécessaire dans la technique antérieure pour écarter les branches entre leurs positions extrêmes.

Dans la présente demande, on définit également par « amont » et « aval » des localisations par rapport à la direction d'engagement du raccord mâle dans le raccord femelle. Le raccord mâle a ainsi une extrémité libre amont qui est engagée dans une extrémité libre aval du raccord femelle.

Le connecteur selon l'invention peut comprendre une ou plusieurs des caractéristiques suivantes, prises isolément les unes des autres, ou en combinaison les unes avec les autres :
- dans ladite position fonctionnelle, l'épingle s'étend principalement dans un plan perpendiculaire audit premier axe, et dans ladite position non fonctionnelle, l'épingle s'étend principalement de manière inclinée par rapport audit premier axe ;
- dans ladite position non fonctionnelle, l'épingle est inclinée de sorte que des extrémités libres des branches soient situées en aval par rapport à des extrémités opposées des branches, par rapport à une direction d'engagement du raccord mâle dans le raccord femelle ;
- le raccord femelle comprend deux lumières qui sont sensiblement diamétralement opposées par rapport audit premier axe et qui ont chacune une forme allongée en direction circonférentielle autour de ce premier axe, chacune de ces lumières étant destinée à être traversée par l'une desdits portion ;

- le raccord femelle comprend en outre deux encoches qui sont sensiblement diamétralement opposées par rapport audit premier axe et qui communiquent respectivement avec lesdites lumières, chacune des encoches ayant une paroi latérale qui est inclinée par rapport à un plan perpendiculaire audit premier axe et sur laquelle l'une desdites portions est apte à coopérer par appui axial lorsque l'épingle est dans sa position non fonctionnelle ;
- chacune des encoches a une forme générale en V ou en coin et comprend une extrémité fine et une extrémité élargie qui est située du côté d'une extrémité libre de la branche correspondante ;
- chacune des encoches comprend une première partie qui débouche à l'intérieur du raccord femelle, et une seconde partie qui définit une marche, cette marche étant configurée pour coopérer par appui radial avec une extrémité libre de la branche correspondante, afin de maintenir l'épingle dans sa position non fonctionnelle ;
- ladite marche comprend un coin saillant du côté de la lumière correspondante, ce coin saillant comportant un ergot de retenue de l'épingle dans sa position non fonctionnelle ;
- ladite marche est reliée, du côté opposé à l'ergot, à une butée d'arrêt de l'épingle ;
- les marches du raccord femelle comprennent des surfaces parallèles de glissement des extrémités libres des branches ;
- dans sa position fonctionnelle, l'épingle est apte à se déplacer dans un plan perpendiculaire audit premier axe, et dans sa position non fonctionnelle, l'épingle est apte à se déplacer dans un plan différent, qui est de préférence incliné par rapport audit premier axe ;
- ladite partie du raccord mâle est une partie tronconique qui comprend une extrémité amont de plus petit diamètre et une extrémité aval de plus grand diamètre, cette partie coopérant par appui avec lesdites portions dans des zones qui sont plus proches de son extrémité aval que de son extrémité aval ;
- le raccord femelle comprend des renfoncements qui sont sensiblement diamétralement opposés par rapport audit premier axe, et qui sont configurés pour accueillir des extrémités libres pliées desdites branches lorsque l'épingle est déplacée depuis sa position fonctionnelle à une position de démontage dans laquelle l'épingle a ladite configuration écartée ;

La présente invention concerne également un circuit de fluide pour un véhicule automobile, comportant au moins un connecteur tel que décrit ci-dessus.

La présente invention concerne également un procédé d'assemblage d'un connecteur fluidique tel que décrit ci-dessus, comprenant les étapes de :
- montage de l'épingle sur le raccord femelle, l'épingle étant dans sa position non fonctionnelle, et
- engagement du raccord mâle dans le raccord femelle, cet engagement provoquant le déplacement de l'épingle de sa position non fonctionnelle à sa position fonctionnelle dans laquelle lesdites portions sont situées au niveau de ladite au moins une lumière et se logent dans la gorge du raccord mâle par retour élastique.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en perspective d'un raccord femelle et d'une épingle pour un connecteur selon l'invention ;
[Fig. 2] la figure 2 est une vue schématique en perspective d'un raccord mâle pour un connecteur selon l'invention ;
[Fig. 3] la figure 3 est une vue schématique de face du raccord mâle de la figure 2 ;
[Fig. 4a-4b] les figures 4a et 4b sont des vues schématiques en perspective de deux parties du raccord femelle de la figure 1 ;
[Fig. 5] la figure 5 est une vue schématique en coupe axiale du raccord femelle de la figure 1 ;
[Fig. 6a-6b] les figures 6a-6b sont des vues schématiques en perspective d'une des parties du raccord femelle de la figure 1 ;
[Fig. 7] la figure 7 est une vue schématique en perspective de l'épingle de la figure 1 ;
[Fig. 8a-8b] les figures 8a et 8b sont des vues schématiques, respectivement de côté et de face, du raccord femelle et de l'épingle de la figure 1, et illustrent l'épingle dans une position non fonctionnelle ;
[Fig. 9] la figure 9 est une vue schématique de côté du connecteur selon l'invention, qui comprend le raccord femelle et l'épingle de la figure 1 ainsi que le raccord mâle de la figure 2, et illustre l'épingle dans une position fonctionnelle et ses branches dans une configuration rapprochée ;
[Fig. 10] la figure 10 est une vue schématique en coupe axiale du connecteur de la figure 9 ;
[Fig. 11] la figure 11 est une vue schématique de face du connecteur de la figure 9 sans le raccord mâle ; et
[Fig. 12a-12b] les figures 12a et 12b sont des vues schématiques, respectivement de côté et de face, du raccord femelle et de l'épingle de la figure 1, et illustrent l'épingle dans une position dans laquelle ses branches sont dans une configuration écartée.

### Description détaillée de l'invention

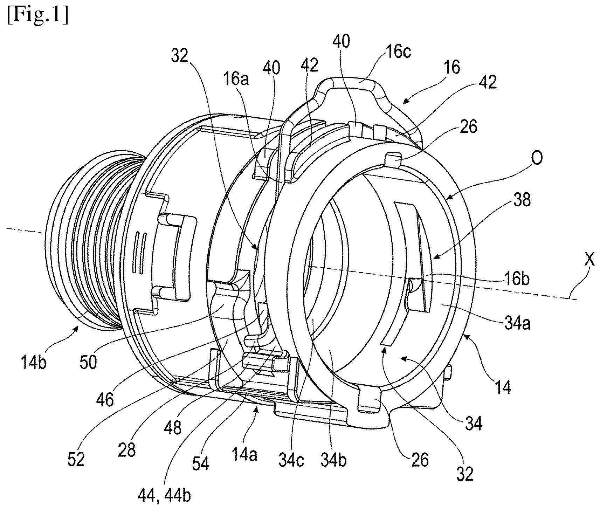

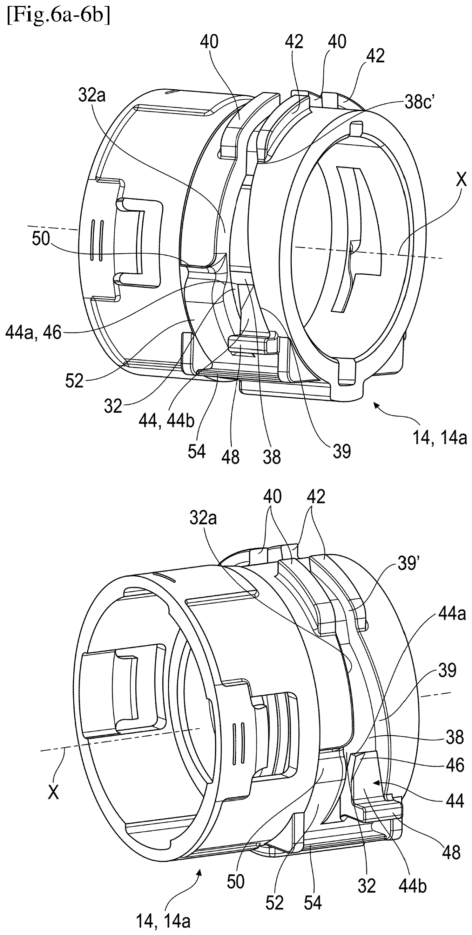

Les figures 1 à 12b illustrent un mode de réalisation d'un connecteur fluidique 10 selon l'invention.

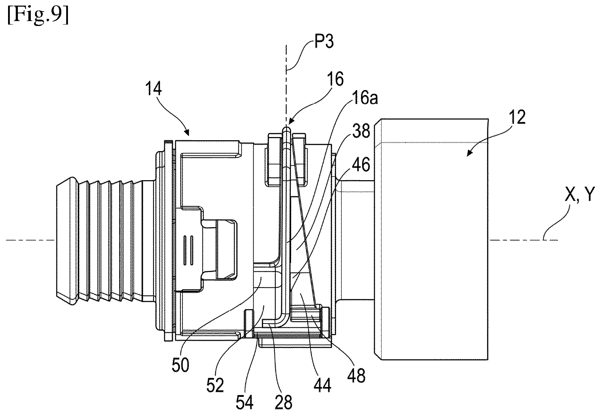

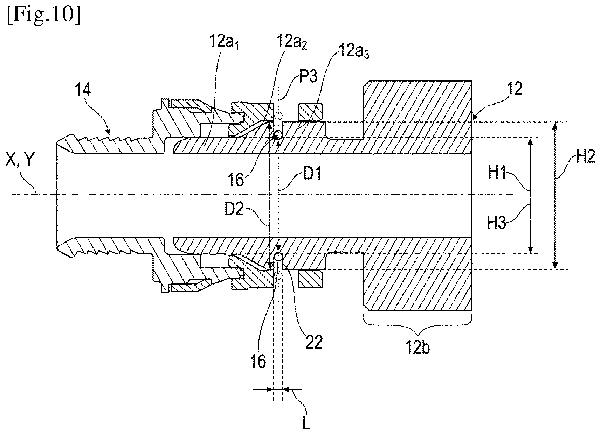

Le connecteur 10 est montré complet aux figures 9 et 10.

Le connecteur 10 comprend pour l'essentiel trois éléments à savoir un raccord mâle 12, un raccord femelle 14 et une épingle 16.

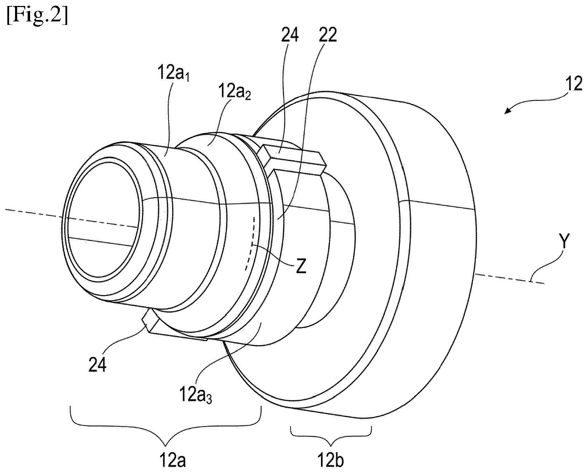

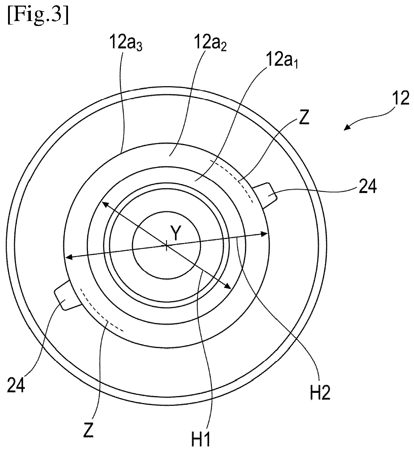

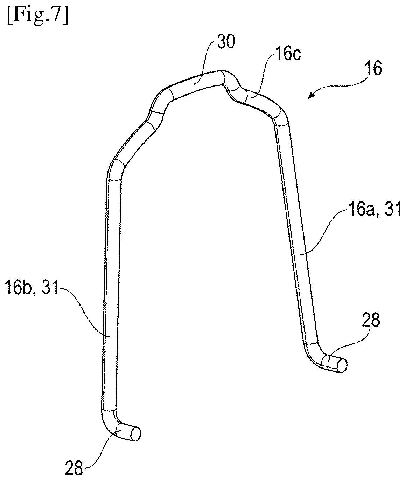

Le raccord mâle 12 est montré seul aux figures 2 et 3. L'épingle 16 est montrée seule à la figure 7. Le raccord femelle 14 équipée de l'épingle 16 est visible aux figures 1, 4a-4b, 5, 6a-6b, 8a-8b11 et 12a-12b.

On va décrire les éléments du connecteur 10 les uns après les autres.

Le raccord mâle 12 (figures 2 et 3) a une forme générale tubulaire et comprend un axe principal Y qui correspond à l'axe d'allongement de son passage interne. Bien que le raccord mâle 12 ait une forme allongée rectiligne dans les dessins, il pourrait en variante avoir une forme coudée.

Le raccord mâle 12 comprend deux tronçons axiaux 12a, 12b. Le premier tronçon 12a est un tronçon d'engagement destiné à être engagé dans le raccord femelle 14. Le second tronçon 12b est un tronçon de raccordement destiné à être raccordé à un tuyau ou à une conduite d'un circuit de fluide.

Le tronçon 12a comprend trois parties successives, à savoir une partie cylindrique 12a1, une partie tronconique 12a2 et une autre partie cylindrique 12a3. La partie 12a1 a un diamètre H1 et la partie 12a3 a un diamètre H2 qui est supérieur à H1. La partie 12a2 s'étend depuis la partie 12a1 jusqu'à la partie 12a3 et a donc un diamètre qui varie de H1 jusqu'à H2. La partie 12a3 est située du côté du tronçon 12a, et la partie 12a1 est située du côté opposé au tronçon 12a et forme une extrémité libre du raccord mâle 12.

Le raccord mâle 12 comprend une gorge annulaire 22 à sa périphérie externe. Dans l'exemple représenté, cette gorge 22 est située dans la partie 12a3 et à proximité de la partie 12a2 (ou à l'intersection entre les parties 12a2 et 12a3).

La gorge 22 a une dimension axiale L. La gorge 22 un diamètre interne H3 et un diamètre externe H2 (figure 10). Dans l'exemple représenté, H3 est supérieure ou égale à H1.

Le raccord mâle 12 peut en outre comprendre au moins un organe 24 en saillie ou au contraire en creux, par exemple sur sa partie 12a3, qui est configurée pour coopérer par emboîtement avec un organe 26 complémentaire du raccord femelle 14. Dans l'exemple représenté, les organes 24 sont au nombre de deux et sont diamétralement opposés. Ils sont en saillie sur la partie 12a3 et ont une forme générale allongée le long de l'axe Y. La coopération des organes 24, 26 peut avoir une fonction d'indexage et/ou de guidage en translation du raccord mâle 12 dans le raccord femelle 14.

Le raccord 12 peut être réalisé en plastique, métal ou matériau composite. Il peut être réalisé d'une seule pièce.

L'épingle 16 (figure 7) a une forme générale en U et est montée à cheval sur le raccord femelle 14 comme illustré à la figure 1. L'épingle 16 comporte deux branches latérales 16a, 16b qui sont reliées entre elles par un pont intermédiaire 16c.

Dans l'exemple représenté, les branches 16a, 16b sont essentiellement rectilignes mais pourraient en variante être courbées. Les extrémités libres 28 des branches 16a, 16b opposées au pont 16c sont pliées ou recourbées, par exemple à 90°.

Le pont 16c peut avoir une forme quelconque et par exemple incurvée. Il comprend de préférence une partie médiane 30 facilitant la préhension de l'épingle 16 par un opérateur, directement à la main ou à l'aide d'un outil.

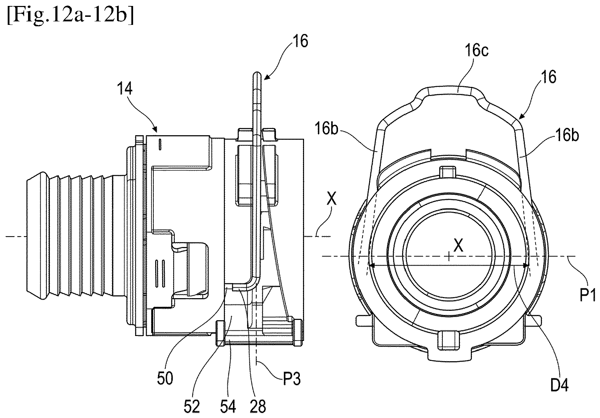

L'épingle 16 est déformable élastiquement par écartement et rapprochement de ses branches 16a, 16b. L'épingle 16 peut adopter plusieurs configurations notamment entre une configuration (extrême) rapprochée visible aux figures 9 à 11, et une configuration (extrême) écartée visible aux figures 10, 12a et 12b.

Les branches 16a, 16b ont des portions 31 configurées pour traverser au moins une lumière 32 du raccord femelle 14 et pour être engagées dans la gorge 22 du raccord mâle 12 pour le bloquer axialement vis-à-vis du raccord femelle 14.

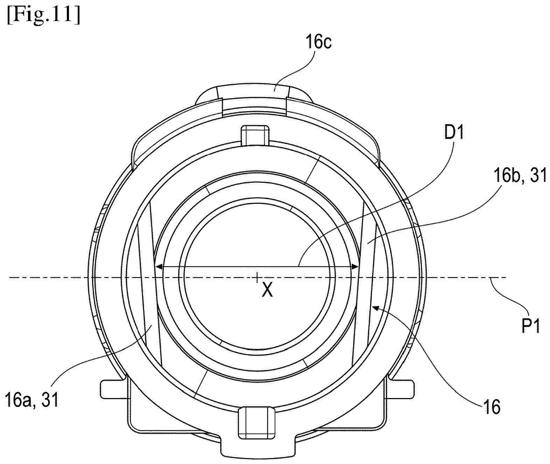

Lorsque les branches 16a, 16b sont dans la configuration (extrême) rapprochée visible des figures 9 à 11, les portions 31 sont à une distance D1 l'une de l'autre (figures 10 et 11). Dans cette configuration, les branches 16a, 16b et leurs portions 31 ne sont pas forcément parallèles et la distance D1 est la plus petite distance mesurée entre les branches 16a, 16b à l'intérieur du raccord femelle 14 et dans un plan P1 passant par l'axe X du raccord femelle 14 (figure 11). Dans cette configuration et comme illustré à la figure 10, les portions 31 sont logées dans la gorge 22 et on comprend donc que la distance D1 est proche ou égale à H3.

Lorsque les branches 16a, 16b sont dans la configuration (extrême) écartée visible en traits pointillés à la figure 10, les portions 31 sont à une distance D2 l'une de l'autre. Dans cette configuration, les branches 16a, 16b et leurs portions 31 ne sont pas forcément parallèles et la distance D2 est la plus petite distance mesurée entre les branches 16a, 16b dans un plan P1 passant par l'axe X du raccord femelle 14. Dans l'exemple représenté, D2 est proche ou égale à H2. D2 est donc supérieure à D1. Dans cette configuration, les branches 12a, 12b et leurs portions 31 ne sont plus logées dans la gorge 22 du raccord mâle 12 qui peut être retiré par traction axiale du raccord femelle 14.

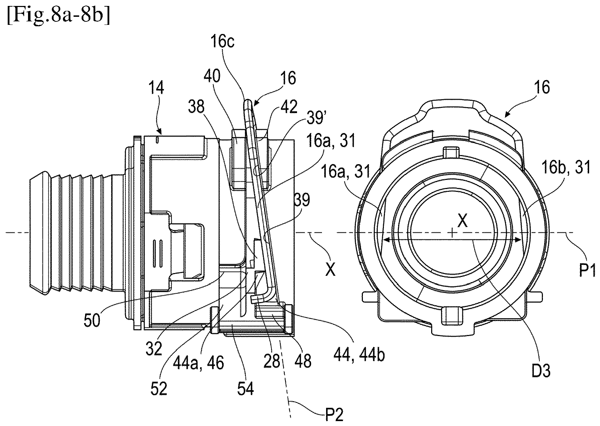

Selon l'invention, l'épingle 16 peut adopter une configuration intermédiaire écartée visible aux figures 8a et 8b notamment. Dans cette configuration, les portions 31 sont à une distance D3 l'une de l'autre (figures 8b). Les branches 16a, 16b et leurs portions 31 ne sont pas forcément parallèles et la distance D3 est la plus petite distance mesurée entre les branches 16a, 16b à l'intérieur du raccord femelle 14 et dans un plan P1 passant par l'axe X du raccord femelle 14.

La distance D3 est comprise entre D1 et D2 et donc entre H1 et H2. On comprend donc que la partie tronconique 12a2 du raccord mâle 12 est apte à coopérer avec les portions 31 de l'épingle 16 lorsque ses branches 16a, 16b sont dans cette configuration. La coopération du raccord mâle 12 avec l'épingle 16 sera décrite dans le détail après la description détaillée du raccord femelle 14.

Lorsque les branches 16a, 16b sont dans la configuration (extrême) écartée visible des figures 12a et 12b, les portions 31 sont à une distance D4 l'une de l'autre. Dans cette configuration, les branches 16a, 16b et leurs portions 31 ne sont pas forcément parallèles et la distance D4 est la plus grande distance mesurée entre les branches 16a, 16b dans un plan P1 passant par l'axe X du raccord femelle 14 (figure 12b). Dans l'exemple représenté, D4 est supérieure à D2. L'épingle 16 peut être maintenue dans cette configuration par coopération de ses branches 16a, 16b et en particulier de ses extrémités 28 avec le raccord femelle 14.

L'épingle 16 est métallique.

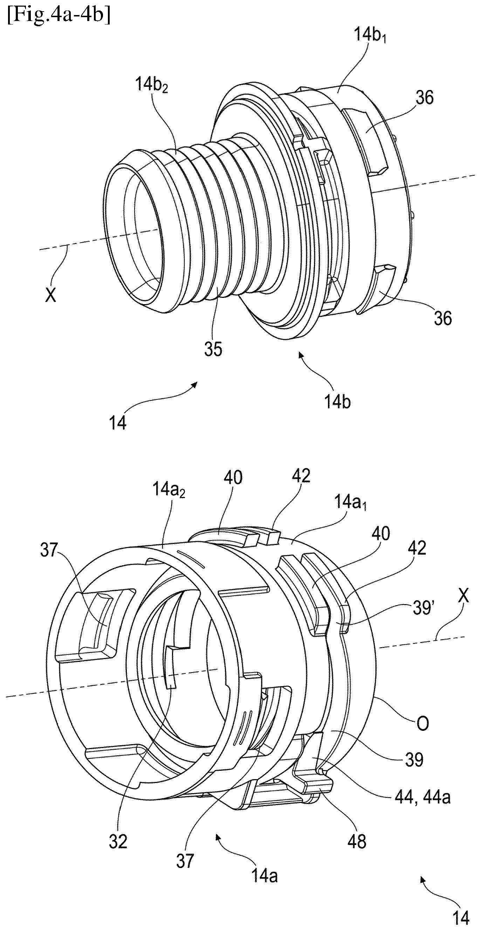

Le raccord femelle 14 (figures 4a et 4b) a une forme générale tubulaire et comprend un axe principal X qui correspond à l'axe d'allongement de son passage interne. Bien que le raccord femelle 14 ait une forme allongée rectiligne dans les dessins, il pourrait en variante avoir une forme coudée.

Lors de l'engagement du raccord mâle 12 dans le raccord femelle 14, les axes X et Y sont confondus ou alignés.

Le raccord femelle 14 comprend deux parties 14a, 14b dans l'exemple représenté qui sont dissociées l'une de l'autre aux figures 4a et 4b. En variante, le raccord femelle 14 pourrait être formé d'une seule pièce.

Les deux parties 14a, 14b sont destinées à être emboîtées l'une dans l'autre. La partie 14a de la figure 4b est une partie d'engagement dont un premier tronçon 14a1 est destiné à recevoir le raccord mâle 12 et un second tronçon 14a2 est destiné à recevoir l'autre partie 14b.

La partie 14b de la figure 4a est une partie de raccordement dont un premier tronçon 14b1 est destiné à être engagé dans le tronçon 14a2 et un second tronçon 14b2 est destiné à être raccordé à un tuyau ou à une conduite d'un circuit de fluide. Ce second tronçon 14b2 peut par exemple comprendre un filetage externe ou des nervures d'ancrage 35 bien que cet aspect ne soit pas limitatif.

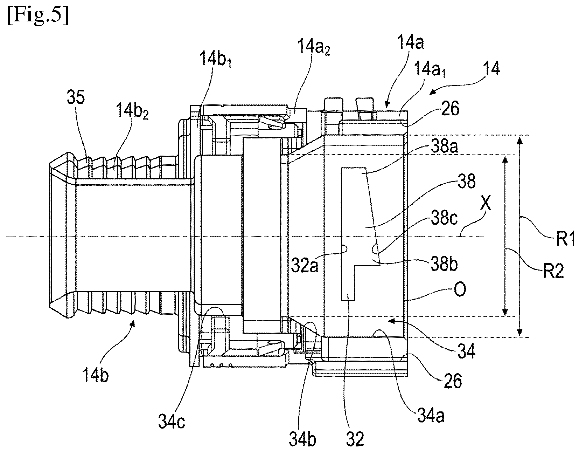

Dans l'exemple représenté qui n'est pas limitatif, la partie 14b et en particulier son tronçon 14b1 comprend des pattes 36 réparties autour de l'axe X et configurées pour coopérer par encliquetage élastique avec des moyens 37 complémentaires de la partie 14a et en particulier du tronçon 14a2 de cette dernière. Cette coopération et la position montée des parties 14a, 14b l'une dans l'autre est notamment visible à la figure 5.

Le raccord femelle 14 comprend un passage interne 34 comportant notamment trois parties 34a, 34b, 34c qui sont destinées à recevoir le raccord mâle 12. La partie 34a est une partie de plus grand diamètre R1 qui est légèrement supérieur au diamètre H2 pour que cette partie 34a puisse accueillir la partie 12a3 du raccord mâle 12 comme illustré à la figure 10. Cette partie 34a est définie par le tronçon 14a1 dans l'exemple représenté. La partie 34c est une partie de plus petit diamètre R2 qui est légèrement supérieur au diamètre H1 pour que cette partie 34c puisse accueillir la partie 12a1 du raccord mâle comme illustré à la figure 10. Enfin, la partie 34b est une partie tronconique qui est située entre les parties 34a, 34c et a un diamètre qui varie de R1 à R2. Cette partie 34a est destinée à accueillir la partie 12a2 du raccord mâle 12 comme illustré à la figure 10.

Le raccord femelle 14 et en particulier sa partie 14a comprend à son extrémité libre les organes 26 précités, qui sont ici deux encoches diamétralement opposées. Cette extrémité libre du raccord femelle 14 définit l'orifice O d'insertion du raccord mâle 12.

Le raccord femelle 14 et en particulier sa partie 14a comprend ici deux lumières 32 diamétralement opposées et qui sont destinées à être traversées par les branches 16a, 16b de l'épingle 16.

Chaque lumière 32 une forme allongée en direction circonférentielle autour de l'axe X. Chaque lumière 32 a par exemple une étendue circonférentielle supérieure ou égale à 30° autour de l'axe X.

Le raccord femelle 14 et en particulier sa partie 14a comprend en outre deux encoches 38 qui sont diamétralement opposées et qui communiquent respectivement avec les lumières 32. Les encoches 38 sont ici formées en aval des lumières 32.

Dans l'exemple représenté, chaque encoche 38 a une forme générale en V ou en coin et comprend une extrémité fine 38a et une extrémité élargie 38b.

L'extrémité fine 38a de l'encoche est située au niveau d'une extrémité libre de la lumière 32 correspondante et communique avec cette extrémité libre. L'encoche 38 a une forme allongée également en direction circonférentielle et peut avoir une étendue circonférentielle similaire à celle de la lumière 32. L'extrémité élargie 38b de chaque encoche 38 est située du côté de l'autre extrémité libre de la lumière 32.

Du côté opposé à l'orifice O, chaque lumière 32 a une paroi latérale 32a qui est située dans un plan perpendiculaire à l'axe X. Cette paroi 32a a pour fonction de guider l'épingle 16 lors de ses déformations et peut se prolonger au-delà de la lumière 32. Dans l'exemple représenté, les parois 32a des lumières 32 sont prolongées grâce à des premiers rebords circonférentiels 40 prévus sur le raccord femelle 14 à sa périphérie externe. Ces rebords 40 sont situés en amont des lumières 32 et sur une partie supérieure du raccord 14.

Chacune des encoches 38 a une paroi latérale 38c qui est inclinée par rapport à un plan perpendiculaire à l'axe X. Le raccord femelle 14 comprend des seconds rebords circonférentiels 42 à sa périphérie externe et à son extrémité supérieure, qui sont écartés axialement des rebords 40, et qui forment des prolongements 38c' des parois latérales 38c des encoches 38. Ces prolongements 38c' peuvent également être inclinés par rapport à un plan perpendiculaire à l'axe X. Les rebords 42 sont situés en aval des lumières 32. Les rebords 42 sont sensiblement alignés axialement avec les rebords 40.

Les parois 39 des encoches 38 sont destinées à coopérer par appui axial avec l'épingle et en particulier ses branches 16a, 16b. Les parois 32a et les prolongements 39' sont destinés à coopérer avec les branches 16a, 16b pour les guider lors de leurs déformations.

Chacune des encoches 38 comprend une première partie (supérieure) 38c qui débouche à l'intérieur du raccord femelle 14, et une seconde partie (inférieure) qui définit une marche 44. Les dessins et en particulier la figure 5 montrent que la lumière 32 et la partie 38c de l'encoche 38 associée forme un « P ».

La marche 44 est configurée pour coopérer par appui radial avec une extrémité libre 28 de la branche 16a, 16b correspondante, comme illustré à la figure 1 notamment.

La marche 44 comprend un coin saillant 44a du côté de la lumière 32 correspondante. Ce coin saillant 44a comporte de préférence un ergot 46 de retenue de cette extrémité libre 28. Du côté opposé au coin saillant 44a ou à l'ergot 46, la marche 44 est reliée à une butée 48 d'arrêt de l'épingle 16.

De préférence, les marches 40 comprennent des surfaces 40b orientées vers l'extérieur qui sont parallèles et qui sont configurées pour autoriser le glissement des extrémités libres 28 des branches 16a, 16b.

Le raccord femelle 14 comprend en amont de chaque lumière 32, une portion 52 de surface cylindrique orientée vers l'extérieur. Les portions de surface 52 sont sensiblement alignées axialement avec les marches 44 et forment des surfaces d'appui radial des extrémités libres 28 des branches 16a, 16b et de glissement circonférentiel de ces extrémités libres 28.

Chaque portion 52 s'étend autour de l'axe X depuis un renfoncement 50 supérieur, qui est sensiblement aligné axialement avec le coin 44a de la marche 44 correspondante, et une butée 54 inférieure.

Les renfoncements 50 sont sensiblement diamétralement opposés par rapport à l'axe X et sont configurés pour accueillir les extrémités libres 28 des branches 16a, 16b dans la position écartée de l'épingle 16. Ces renfoncements 50 ont ici une orientation axiale et débouchent au niveau des parois 32a des lumières 32.

Les butées 54 sont situés juste en dessous des extrémités libres des encoches 32 opposées aux rebords 40, 42.

Comme évoqué dans ce qui précède, les branches 16a, 16b de l'épingle 16 peuvent adopter plusieurs configurations. L'épingle 16 peut en outre adopter deux positions distinctes sur le raccord femelle 14, à savoir une position non fonctionnelle et une position fonctionnelle.

Les positions non fonctionnelle et fonctionnelle sont à distance axiale l'une de l'autre, ce qui signifie que l'épingle 16 est déplacée axialement sur le raccord femelle 14 pour passer de sa position non fonctionnelle à sa position fonctionnelle, et inversement.

Dans la position non fonctionnelle illustrée aux figures 1, 8a et 8b, l'épingle 16 est inclinée par rapport à un plan perpendiculaire à l'axe X et est donc située dans un plan P2 incliné par rapport à l'axe X. Dans cette position, les extrémités libres 28 des branches 16a, 16b sont situées en aval par rapport au pont 16c et sont en appui radial sur les marches 40 et en particulier leurs surfaces 40b. Les branches 16a, 16b et en particulier leurs portions 31 sont en appui axial sur les parois 39 des encoches 38. Par ailleurs, les extrémités libres 28 des branches 16a, 16b peuvent coopérer avec les ergots 46 d'une part et les butées 48 d'autre part pour être maintenues sur les marches 40. Les extrémités des branches 16a, 16b situées du côté du pont 16c peuvent coopérer par butée axiale avec les parois 32a et les prolongements 39' des rebords 40, 42 afin d'éviter un déplacement axial accidentel de l'épingle 16 sur le raccord femelle 14.

C'est dans cette position non fonctionnelle des figures 1 et 8a-8b que les branches 16a, 16b de l'épingle 16 ont la configuration intermédiaire écartée évoquée dans ce qui précède. Cette configuration est ici assurée et maintenue grâce à la coopération des extrémités libres 28 des branches 16a, 16b avec les marches 40 du raccord femelle 14.

L'épingle 16 peut toutefois conserver une certaine mobilité dans le plan P2 incliné dans laquelle elle est située, par glissement sur les surfaces 44b des marches 40.

Dans la position fonctionnelle illustrée aux figures 9 et suivantes, l'épingle 16 est située dans un plan perpendiculaire P3 à l'axe X. Dans cette position, les branches 16a, 16b de l'épingle 16 peuvent adopter les deux positions extrêmes précitées écartée et rapprochée, dans le plan. P3

Dans la position fonctionnelle, les portions 31 des branches 16a, 16b sont situées au niveau des lumières 32 et sont aptes à les traverser par retour élastique. Les branches 16a, 16b passent alors d'une position écartée à la position rapprochée des figures 9 et 10. On constate à la figure 9 que dans cette position, les extrémités libres 28 des branches 16a, 16b viennent se loger juste au-dessus des butées 54, et leurs portions 31 sont logées dans la gorge 22 du raccord mâle 12. Le raccord mâle 12 est alors bloqué axialement dans le raccord femelle 14.

Pour retirer le raccord mâle 12 du raccord femelle 14, il suffit de retirer l'épingle 16 de la gorge 22 du raccord mâle 12. Pour cela, un effort de traction en direction radiale peut être appliqué sur le pont 16c de l'épingle 16 pour l'écarter du raccord femelle 14. Le déplacement de l'épingle 16 est guidé par la coopération des branches 16a, 16b avec les parois latérales de la gorge 22 et est réalisé dans le plan P3. Lors de ce déplacement, les extrémités libres 28 des branches 16a, 16b glissent sur les portions de surface 52 et viennent se loger dans les renfoncements 50 qui maintiennent ainsi les branches 16a, 16b dans la configuration extrême écartée représentée aux figures 12a et 12b.

La position écartée des branches 16a, 16b pourraient également être considérée comme illustrée par la figure 9 dans la mesure où la position axiale de l'épingle 16 reste la même, et est en outre illustrée par des traits pointillés à la figure 10.

Selon l'invention, le déplacement axial de l'épingle 16 de sa position non fonctionnelle à sa position fonctionnelle est réalisé au moyen du connecteur mâle 12. C'est-à-dire que c'est le raccord mâle 12 lui-même qui, lors de son insertion dans le raccord femelle 14, provoque le déplacement axial de l'épingle 16. Lors de l'insertion du raccord mâle 12, sa partie tronconique 14a2 prend appui sur les portions 31 des branches 16a, 16b. Lorsque l'insertion est poursuivie, les branches 16a, 16b glissent sur la partie 14a2 et s'écartent l'une de l'autre en passant de la distance D3 à la distance D2. L'épingle 16 est déplacée jusqu'à ce qu'elle prenne appui axialement sur les parois 32a des lumières 32. L'épingle 16 est alors dans le plan P3. Lorsque la position axiale du raccord mâle 12 dans le raccord femelle 14 est telle que la gorge 22 du raccord mâle 12 est également situé dans le plan P3, les branches 16a, 16b se logent dans la gorge 22 par retour élastique.

Plus D3 est grand, c'est-à-dire plus les branches 16a, 16b sont écartées l'une de l'autre, et plus la force nécessaire pour engager le raccord mâle 12 dans le raccord femelle 14 est faible. D3 est ainsi de préférence plus proche de H2 que de D1. En pratique, cela signifie que les portions 31 des branches 16a, 16b vont prendre appui sur des zones Z de la partie 12a2 du raccord mâle 12, qui sont plus proches de son extrémité de plus grand diamètre H2 que de son extrémité de plus petit diamètre H1. Ces zones Z sont schématiquement illustrées aux figures 2 et 3.

La présente invention concerne également un circuit de fluide pour un véhicule automobile, comportant au moins un connecteur 10 tel que décrit ci-dessus.

La présente invention concerne également un procédé d'assemblage du connecteur fluidique 10, comprenant les étapes évoquées dans ce qui précède de :
- montage de l'épingle 16 sur le raccord femelle 14, l'épingle 16 étant dans sa position non fonctionnelle, et
- engagement du raccord mâle 12 dans le raccord femelle 14, cet engagement provoquant le déplacement de l'épingle 16 de sa position non fonctionnelle à sa position fonctionnelle dans laquelle lesdites portions 31 sont situées au niveau de ladite au moins une lumière 32 et se logent dans la gorge 22 du raccord mâle 12 par retour élastique.

## Revendications

1. Connecteur fluidique (10), comportant :
- un raccord tubulaire femelle (14) ayant un premier axe (X),
- un raccord tubulaire mâle (12) ayant un second axe (Y) et configuré pour être engagé coaxialement dans le raccord femelle (14), et
- une épingle métallique (16) ayant une forme générale en U montée à cheval sur le raccord femelle (14), cette épingle (16) comportant deux branches latérales (16a, 16b) dont des portions (31) sont configurées pour traverser au moins une lumière (32) du raccord femelle (14) et pour être engagées dans une gorge (22) du raccord mâle (12) pour le bloquer axialement vis-à-vis du raccord femelle (14), l'épingle (16) étant déformable élastiquement par écartement et rapprochement de ses branches (16a, 16b) et pouvant adopter plusieurs configurations notamment entre une configuration rapprochée dans laquelle lesdites portions (31) sont à une distance D1 l'une de l'autre et sont logées dans la gorge (22), et une configuration écartée dans laquelle lesdites portions (31) sont à une distance D2 l'une de l'autre et autorisent le retrait du raccord mâle (12) vis-à-vis du raccord femelle (14), D2 étant supérieure à D1,
**caractérisé en ce que** l'épingle (16) est mobile axialement sur le raccord femelle (14) depuis une position non fonctionnelle dans laquelle ses branches (16a, 16b) sont maintenues écartées par le raccord femelle (14) de façon à ce que lesdites portions (31) soient à une distance D3 l'une de l'autre, D3 étant comprise entre D1 et D2, jusqu'à une position fonctionnelle dans laquelle lesdites portions (31) sont situées au niveau de ladite au moins une lumière (32) et sont aptes à la traverser par retour élastique,
et **en ce que** le raccord mâle (12) comprend une partie (12a2) configurée pour être engagée dans le raccord femelle (14) et comportant un diamètre externe (H2) qui est supérieur à D3, de sorte que, lors de l'engagement du raccord mâle (12) dans le raccord femelle (14), cette partie (12a2) coopère directement avec lesdites portions (31) pour déplacer l'épingle (16) de sa position non fonctionnelle à sa position fonctionnelle.

2. Connecteur fluidique (10) selon la revendication 1, dans lequel, dans ladite position fonctionnelle, l'épingle s'étend principalement dans un plan perpendiculaire audit premier axe, et dans ladite position non fonctionnelle, l'épingle (10) s'étend principalement de manière inclinée par rapport audit premier axe.

3. Connecteur fluidique (10) selon la revendication 2, dans lequel, dans ladite position non fonctionnelle, l'épingle (16) est inclinée de sorte que des extrémités libres (28) des branches (16a, 16b) soient situées en aval par rapport à des extrémités opposées des branches, par rapport à une direction d'engagement du raccord mâle (12) dans le raccord femelle (14).

4. Connecteur fluidique (10) selon l'une des revendications précédentes, dans lequel le raccord femelle (14) comprend deux lumières (32) qui sont sensiblement diamétralement opposées par rapport audit premier axe (X) et qui ont chacune une forme allongée en direction circonférentielle autour de ce premier axe (X), chacune de ces lumières (32) étant destinée à être traversée par l'une desdits portions (31).

5. Connecteur fluidique (10) selon la revendication 4, dans lequel le raccord femelle (14) comprend en outre deux encoches (38) qui sont sensiblement diamétralement opposées par rapport audit premier axe (X) et qui communiquent respectivement avec lesdites lumières (32), chacune des encoches (38) ayant une paroi latérale qui est inclinée par rapport à un plan perpendiculaire audit premier axe (X) et sur laquelle l'une desdites portions (31) est apte à coopérer par appui axial lorsque l'épingle (16) est dans sa position non fonctionnelle.

6. Connecteur fluidique (10) selon la revendication 5, dans lequel chacune des encoches (38) a une forme générale en V ou en coin et comprend une extrémité fine (38a) et une extrémité élargie (38b) qui est située du côté d'une extrémité libre de la branche (16a, 16b) correspondante.

7. Connecteur fluidique (10) selon la revendication 5 ou 6, dans lequel chacune des encoches (38) comprend une première partie (38c) qui débouche à l'intérieur du raccord femelle (14), et une seconde partie qui définit une marche (44), cette marche (44) étant configurée pour coopérer par appui radial avec une extrémité libre (28) de la branche (16a, 16b) correspondante, afin de maintenir l'épingle (16) dans sa position non fonctionnelle.

8. Connecteur fluidique (10) selon la revendication 7, dans lequel ladite marche (44) comprend un coin saillant (44a) du côté de la lumière (32) correspondante, ce coin saillant (44a) comportant un ergot de retenue (46) de l'épingle (16) dans sa position non fonctionnelle.

9. Connecteur fluidique (10) selon la revendication 7 ou 8, dans lequel ladite marche (44) est reliée, du côté opposé à l'ergot (46), à une butée (48) d'arrêt de l'épingle (16).

10. Connecteur fluidique (10) selon l'une des revendications 7 à 9, dans lequel les marches (44) du raccord femelle (14) comprennent des surfaces (44b) parallèles de glissement des extrémités libres (28) des branches (16a, 16b).

11. Connecteur fluidique (10) selon l'une des revendications précédentes, dans lequel, dans sa position fonctionnelle, l'épingle (16) est apte à se déplacer dans un plan (P3) perpendiculaire audit premier axe (X), et dans sa position non fonctionnelle, l'épingle (16) est apte à se déplacer dans un plan (P2) différent, qui est de préférence incliné par rapport audit premier axe.

12. Connecteur fluidique (10) selon l'une des revendications précédentes, dans lequel ladite partie (12a2) du raccord mâle (12) est une partie tronconique qui comprend une extrémité amont de plus petit diamètre (H1) et une extrémité aval de plus grand diamètre (H2), cette partie (12a2) coopérant par appui avec lesdites portions dans des zones (Z) qui sont plus proches de son extrémité aval que de son extrémité amont.

13. Connecteur fluidique (10) selon l'une des revendications précédentes, dans lequel le raccord femelle (14) comprend des renfoncements (50) qui sont sensiblement diamétralement opposés par rapport audit premier axe (X), et qui sont configurés pour accueillir des extrémités libres (28) pliées desdites branches (16a, 16b) lorsque l'épingle (16) est déplacée depuis sa position fonctionnelle à une position de démontage dans laquelle l'épingle (16) a ladite configuration écartée.

14. Circuit de fluide pour un véhicule automobile, comportant au moins un connecteur (10) selon l'une des revendications précédentes.

15. Procédé d'assemblage d'un connecteur fluidique (10) selon l'une des revendications 1 à 13, comprenant les étapes de :
- montage de l'épingle (16) sur le raccord femelle (14), l'épingle (16) étant dans sa position non fonctionnelle, et
- engagement du raccord mâle (12) dans le raccord femelle (14), cet engagement provoquant le déplacement de l'épingle (16) de sa position non fonctionnelle à sa position fonctionnelle dans laquelle lesdites portions (31) sont situées au niveau de ladite au moins une lumière (32) et se logent dans la gorge (22) du raccord mâle (12) par retour élastique.

## Patentansprüche

1. Fluidverbinder (10), umfassend:
- ein rohrförmiges weibliches Anschlussstück (14), das eine erste Achse (X) aufweist,
- ein rohrförmiges männliches Anschlussstück (12), das eine zweite Achse (Y) aufweist und konfiguriert ist, um in dem weiblichen Anschlussstück (14) koaxial in Eingriff gebracht zu werden, und
- eine metallische Nadel (16), die eine allgemeine U-Form aufweist, die auf dem weiblichen Anschlussstück (14) aufsitzend montiert ist, wobei diese Nadel (16) zwei seitliche Zweige (16a, 16b) umfasst, von denen Abschnitte (31) konfiguriert sind, um mindestens eine Öffnung (32) des weiblichen Anschlussstücks (14) zu durchqueren und um in einer Auskehlung (22) des männlichen Anschlussstücks (12) in Eingriff gebracht zu werden, um es gegenüber dem weiblichen Anschlussstück (14) axial zu blockieren, wobei die Nadel (16) durch Beabstandung und Annäherung seiner Zweige (16a, 16b) elastisch verformbar ist und mehrere Konfigurationen annehmen kann, insbesondere zwischen einer angenäherten Konfiguration, in der die Abschnitte (31) in einem Abstand D1 voneinander vorliegen und in der Auskehlung (22) untergebracht sind, und einer beabstandeten Konfiguration, in der die Abschnitte (31) in einem Abstand D2 voneinander vorliegen und das Entfernen des männlichen Anschlussstücks (12) gegenüber dem weiblichen Anschlussstück (14) erlauben, wobei D2 größer als D1 ist,
**dadurch gekennzeichnet, dass** die Nadel (16) auf dem weiblichen Anschlussstück (14) von einer nicht funktionellen Position, in der ihre Zweige (16a, 16b) durch das weibliche Anschlussstück (14) derart beabstandet gehalten werden, dass die Abschnitte (31) in einem Abstand D3 voneinander vorliegen, wobei D3 zwischen D1 und D2 liegt, bis zu einer funktionellen Position axial beweglich ist, in der die Abschnitte (31) sich auf Höhe der mindestens einen Öffnung (32) befinden und in der Lage sind, sie durch elastische Umkehr zu durchqueren,
und dadurch, dass das männliche Anschlussstück (12) einen Teil (12a2) umfasst, der konfiguriert ist, um in dem weiblichen Anschlussstück (14) in Eingriff gebracht zu werden und einen externen Durchmesser (H2) umfasst, der größer ist als D3, derart, dass, bei dem In-Eingriff-Bringen des männlichen Anschlussstücks (12) in dem weiblichen Anschlussstück (14), dieser Teil (12a2) direkt mit den Abschnitten (31) zusammenwirkt, um die Nadel (16) von ihrer nicht funktionellen Position zu ihrer funktionellen Position zu verschieben.

2. Fluidverbinder (10) nach Anspruch 1, wobei sich die Nadel in der funktionellen Position hauptsächlich in einer Ebene senkrecht zu der ersten Achse erstreckt, und sich die Nadel (10) in der nicht funktionellen Position in Bezug auf die erste Achse hauptsächlich auf geneigte Weise erstreckt.

3. Fluidverbinder (10) nach Anspruch 2, wobei die Nadel in der nicht funktionellen Position derart geneigt ist, dass sich freie Enden (28) der Zweige (16a, 16b) in Bezug auf die gegenüberliegenden Enden der Zweige, in Bezug auf eine Eingriffsrichtung des männlichen Anschlussstücks (12) in dem weiblichen Anschlussstück (14), stromabwärts befinden.

4. Fluidverbinder (10) nach einem der vorstehenden Ansprüche, wobei das weibliche Anschlussstück (14) zwei Öffnungen (32) umfasst, die in Bezug auf die erste Achse (X) im Wesentlichen diametral gegenüberliegend vorliegen und die jeweils in Umfangsrichtung um diese erste Achse (X) herum eine längliche Form aufweisen, wobei jede dieser Öffnungen (32) dazu bestimmt ist, von einem der Abschnitte (31) durchquert zu werden.

5. Fluidverbinder (10) nach Anspruch 4, wobei das weibliche Anschlussstück (14) weiter zwei Einkerbungen (38) umfasst, die in Bezug auf die erste Achse (X) im Wesentlichen diametral gegenüberliegend vorliegen und die jeweils mit den Öffnungen (32) kommunizieren, wobei jede der Einkerbungen (38) eine Seitenwand aufweist, die in Bezug auf eine zu der ersten Achse (X) senkrechten Ebene geneigt ist und an der einer der Abschnitte (31) in der Lage ist, durch axiales Anliegen zusammenzuwirken, wenn die Nadel (16) in ihrer nicht funktionellen Position vorliegt.

6. Fluidverbinder (10) nach Anspruch 5, wobei jede der Einkerbungen (38) eine allgemeine V- oder Eckenform aufweist und ein dünnes Ende (38a) und ein erweitertes Ende (38b) aufweist, das sich auf der Seite eines freien Endes des entsprechenden Zweigs (16a, 16b) befindet.

7. Fluidverbinder (10) nach Anspruch 5 oder 6, wobei jede der Einkerbungen (38) einen ersten Teil (38c), der im Inneren des weiblichen Anschlussstücks (14) mündet, und einen zweiten Teil umfasst, der eine Stufe (44) definiert, wobei diese Stufe (44) zum Zusammenwirken durch radiales Anliegen mit einem freien Ende (28) des entsprechenden Zweigs (16a, 16b) konfiguriert ist, um die Nadel (16) in ihrer nicht funktionellen Position zu halten.

8. Fluidverbinder (10) nach Anspruch 7, wobei die Stufe (44) eine vorstehende Ecke (44a) auf der Seite der entsprechenden Öffnung (32) umfasst, wobei diese vorstehende Ecke (44a) einen Nocken (46) zum Zurückhalten der Nadel (16) in ihrer nicht funktionellen Position umfasst.

9. Fluidverbinder (10) nach Anspruch 7 oder 8, wobei die Stufe (44) auf der gegenüberliegenden Seite des Nockens (46) mit einem Anschlag (48) zum Stoppen der Nadel (16) verbunden ist.

10. Fluidverbinder (10) nach einem der Ansprüche 7 bis 9, wobei die Stufen (44) des weiblichen Anschlussstücks (14) parallele Oberflächen (44b) zum Verrutschen der freien Enden (28) der Zweige (16a, 16b) umfassen.

11. Fluidverbinder (10) nach einem der vorstehenden Ansprüche, wobei die Nadel (16) in ihrer funktionellen Position in der Lage ist, sich in einer Ebene (P3) senkrecht zu der ersten Achse (X) zu verschieben, und die Nadel (16) in ihrer nicht funktionellen Position in der Lage ist, sich in einer unterschiedlichen Ebene (P2) zu verschieben, die vorzugsweise in Bezug auf die erste Achse geneigt ist.

12. Fluidverbinder (10) nach einem der vorstehenden Ansprüche, wobei der Teil (12a2) des männlichen Anschlussstücks (12) ein kegelförmiger Teil ist, der ein stromabwärtiges Ende mit kleinerem Durchmesser (H1) und ein stromaufwärtiges Ende mit größerem Durchmesser (H2) umfasst, wobei dieser Teil (12a2) durch Anliegen mit den Abschnitten in Zonen (Z) zusammenwirkt, die näher an seinem stromabwärtigen Ende als an seinem stromaufwärtigen Ende vorliegen.

13. Fluidverbinder (10) nach einem der vorstehenden Ansprüche, wobei das weibliche Anschlussstück (14) Verstärkungen (50) umfasst, die in Bezug auf die erste Achse (X) im Wesentlichen diametral gegenüberliegend vorliegen und die konfiguriert sind, um freien gebogenen Enden (28) der Zweige (16a, 16b) aufzunehmen, wenn die Nadel (16) von ihrer funktionellen Position zu einer Demontageposition verschoben wird, in der die Nadel (16) die beabstandete Konfiguration aufweist.

14. Fluidkreislauf für ein Automobilfahrzeug, umfassend mindestens einen Verbinder (10) nach einem der vorstehenden Ansprüche.

15. Verfahren zum Zusammenbau eines Fluidverbinders (10) nach einem der Ansprüche 1 bis 13, umfassend die Schritte:
- Montage der Nadel (16) auf das weibliche Verbindungsstück (14), wobei die Nadel (16) in ihrer nicht funktionellen Position vorliegt, und
- In-Eingriff-Bringen des männlichen Anschlussstücks (12) in dem weiblichen Anschlussstück (14), wobei dieses In-Eingriff-Bringen die Verschiebung der Nadel (16) von ihrer nicht funktionellen Position in ihre funktionelle Position bewirkt, in der sich die Abschnitte (31) auf Höhe der mindestens einen Öffnung (32) befinden und durch elastische Umkehr in der Einkerbung (22) des männlichen Anschlussstücks (12) unterkommen.

## Claims

1. A fluidic connector (10), comprising:
- a female tubular fitting (14) having a first axis (X),
- a tubular male fitting (12) having a second axis (Y) and configured to engage coaxially with the female fitting (14), and
- a generally U-shaped metal pin (16) mounted astride on the female fitting (14), this pin (16) comprising two lateral branches (16a, 16b), portions (31) of which are configured to pass through at least one slit (32) in the female fitting (14) and to be engaged in a gorge (22) in the male fitting (12) to block it axially with respect to the female fitting (14), the pin (16) being elastically deformable by moving its branches (16a, 16b) apart and close together and being able to adopt several configurations, in particular between a close together configuration in which said portions (31) are at a distance D1 from one another and are housed in the gorge (22), and a spaced apart configuration in which said portions (31) are at a distance D2 from one another and allow the male fitting (12) to be removed from the female fitting (14), D2 being greater than D1,
**characterised in that** the pin (16) is axially movable on the female fitting (14) from an inoperative position in which its branches (16a, 16b) are held spaced apart by the female fitting (14) so that said portions (31) are at a distance D3 from one another, D3 being between D1 and D2, to an operative position in which said portions (31) are located at the level of said at least one slit (32) and are able to pass through it by elastic return,
and **in that** the male fitting (12) comprises a part (12a2) configured to be engaged in the female fitting (14) and comprising an external diameter (H2) which is greater than D3, so that, when the male fitting (12) is engaged in the female fitting (14), this part (12a2) cooperates directly with said portions (31) to move the pin (16) from its inoperative position to its operative position.

2. The fluidic connector (10) as claimed in claim 1, wherein in said operative position the pin extends mainly in a plane perpendicular to said first axis, and in said inoperative position the pin (10) extends mainly inclined with respect to said first axis.

3. The fluidic connector (10) as claimed in claim 2, wherein, in said inoperative position, the pin (16) is inclined so that free ends (28) of the branches (16a, 16b) are located downstream from opposite ends of the branches, relative to a direction of engagement of the male fitting (12) with the female fitting (14).

4. The fluidic connector (10) according to one of the preceding claims, wherein the female fitting (14) comprises two slit (32) which are substantially diametrically opposed with respect to said first axis (X) and which each have an elongate shape in the circumferential direction about this first axis (X), each of these slits (32) being intended to be passed through by one of said portions (31).

5. The fluidic connector (10) according to claim 4, wherein the female fitting (14) further comprises two notches (38) which are substantially diametrically opposed with respect to said first axis (X) and which communicate respectively with said slits (32), each of the notches (38) having a lateral wall which is inclined with respect to a plane perpendicular to said first axis (X) and on which one of said portions (31) is adapted to engage by axial abutment when the pin (16) is in its inoperative position.

6. The fluidic connector (10) as claimed in claim 5, wherein each of the notches (38) is generally V-shaped or wedge-shaped and comprises a thin end (38a) and a widened end (38b) which is located on the side of a free end of the corresponding branch (16a, 16b).

7. The fluidic connector (10) according to claim 5 or 6, wherein each of the notches (38) comprises a first part (38c) which opens into the interior of the female fitting (14), and a second part which defines a step (44), this step (44) being configured to cooperate by radial abutment with a free end (28) of the corresponding branch (16a, 16b), in order to maintain the pin (16) in its inoperative position.

8. The fluidic connector (10) according to claim 7, wherein said step (44) comprises a projecting wedge (44a) on the side of the corresponding slit (32), this projecting wedge (44a) comprising a lug (46) for retaining the pin (16) in its inoperative position.

9. The fluidic connector (10) according to claim 7 or 8, wherein said step (44) is connected, on the side opposite the lug (46), to a stop (48) for the pin (16).

10. The fluidic connector (10) according to one of claims 7 to 9, wherein the steps (44) of the female fitting (14) comprise parallel surfaces (44b) for sliding the free ends (28) of the branches (16a, 16b).

11. The fluidic connector (10) according to one of the preceding claims, wherein, in its operative position, the pin (16) is able to move in a plane (P3) perpendicular to said first axis (X), and in its inoperative position, the pin (16) is able to move in a different plane (P2), which is preferably inclined with respect to said first axis.

12. The fluidic connector (10) according to one of the preceding claims, wherein said part (12a2) of the male fitting (12) is a frustoconical part which comprises an upstream end of smaller diameter (H1) and a downstream end of larger diameter (H2), this part (12a2) cooperating by bearing with said portions in areas (Z) which are closer to its downstream end than to its upstream end.

13. The fluidic connector (10) according to any of the preceding claims, wherein the female fitting (14) comprises recesses (50) which are substantially diametrically opposed with respect to said first axis (X), and which are configured to accommodate bent free ends (28) of said branches (16a, 16b) when the pin (16) is moved from its operative position to a disassembly position in which the pin (16) has said spaced apart configuration.

14. A fluid circuit for a motor vehicle, comprising at least one connector (10) according to one of the preceding claims.

15. A method for assembling a fluidic connector (10) according to one of claims 1 to 13, comprising the steps of:
- mounting the pin (16) on the female fitting (14), with the pin (16) in its inoperative position, and
- engaging the male fitting (12) in the female fitting (14), this engagement causing the pin (16) to move from its inoperative position to its operative position in which said portions (31) are located at the level of said at least one slit (32) and are housed in the gorge (22) of the male fitting (12) by elastic return.
